# FASCICULE DE BREVET EUROPEEN

(11) **EP 4 033 437 B1**
(45) Date de publication et mention de la délivrance du brevet: **01.04.2026**
(21) Numéro de dépôt: 21153453.2
(22) Date de dépôt: 26.01.2021
(51) Int. Cl.: G06Q 10/10, G06Q 30/0201, G06Q 30/0203

(54) **PROCÉDÉS ET DISPOSITIFS POUR L'AUTO-ADMINISTRATION D'UN QUESTIONNAIRE DE RECHERCHE PAR UN SUJET HUMAIN DANS LE CADRE D'UNE ÉTUDE SCIENTIFIQUE**
VERFAHREN UND VORRICHTUNGEN ZUR SELBSTVERWALTUNG EINES FORSCHUNGSFRAGEBOGENS DURCH EINE VERSUCHSPERSON IM RAHMEN EINER WISSENSCHAFTLICHEN STUDIE
METHODS AND DEVICES FOR SELF ADMINISTRATION OF A RESEARCH QUESTIONNAIRE BY A HUMAN SUBJECT IN THE CONTEXT OF A SCIENTIFIC STUDY

(43) Date de publication de la demande: 27.07.2022
(73) Titulaire: Université Paris Cité, 75006 Paris (FR); INSTITUT NATIONAL DE LA SANTE ET DE LA RECHERCHE MEDICALE - INSERM, 75013 Paris (FR)
(72) Inventeur: CHEVREUL, Karine, 78360 Montesson (FR); MICHEL, Morgane, 75020 Paris (FR); ALBERTI, Corinne, 94360 Bry sur marne (FR)
(74) Mandataire: A.P.I. Conseil

(56) Documents cités:
- WO-A2-2012/174307
- FR-A1- 2 719 401
- US-A1- 2006 259 922
- US-A1- 2019 339 928

## Description

### Domaine technique

L'invention concerne le domaine général du recueil de données, notamment dans le cadre d'études scientifiques qui visent à améliorer les connaissances et à formuler des hypothèses sur un phénomène social ou scientifique donné. En particulier, il concerne un procédé et un dispositif pour l'auto-administration d'un questionnaire de recherche par un sujet humain dans le cadre d'une étude scientifique.

### Technique antérieure

Ci-après, nous décrivons l'art antérieur connu à partir duquel les inventrices ont développé l'invention.

De nombreux phénomènes sociaux ou scientifiques nécessitent de réaliser une enquête pour en améliorer les connaissances et formuler des hypothèses adéquates.

C'est généralement dans la cadre d'études scientifiques que l'on réalise ces enquêtes, notamment grâce à des questionnaires.

On connait certains questionnaires que l'on dits autoadministrés, car c'est le sujet humain qui se les administre lui-même, dans des lieux divers (p. ex. à domicile) et sans nécessiter une intervention extérieure.

Les questionnaires autoadministrés permettent un recueil et une analyse des données fiable et rapide en réduisant ainsi les risques d'erreur. Ils permettent également de calculer des scores et facilitent l'interprétation des résultats.

En outre, l'absence de contrôle par un interviewer permet de réduire les coûts et le temps nécessaire à leur administration.

Enfin, les questionnaires autoadministrés peuvent être automatisés et diffusés sur ordinateur, tablette, téléphone intelligent, et ce en mode local ou en ligne.

Toutefois, l'auto-administration d'un questionnaire présente quelques limites.

En effet, il est courant qu'un tiers aide le sujet humain pour lire et compléter le questionnaire. C'est notamment le cas lorsque le sujet humain ne maîtrise pas la langue d'administration du questionnaire et/ou la compréhension de l'écrit.

Or, il est admis que si le sujet humain est aidé pour répondre, les réponses peuvent ne pas être celles qu'il aurait indiquées s'il avait été seul.

Dans l'art antérieur, afin de tenir compte de cette source de variabilité, il est courant, lors du recueil des données, d'indiquer le rôle de la personne qui aide le sujet humain de sorte que l'on puisse utiliser cette information au cours de l'analyse des données.

Par exemple, dans le domaine médical, la personne qui aide le sujet humain lors de la passation du questionnaire peut être un médecin, un TEC (technicien d'études cliniques), un proche du sujet humain.

Une telle solution n'est pas pleinement satisfaisante, car elle n'est pas suffisamment précise puisqu'elle ne permet pas d'identifier systématiquement les questions pour lesquelles le sujet humain a bénéficié d'une aide. WO2012/174307A2 (UDANI JAY [US]) 20 décembre 2012 décrit une solution connue de l'art antérieur.

### Résumé de l'invention

L'invention vise à pallier ces inconvénients.

L'invention vise en particulier un procédé pour l'auto-administration, grâce à un dispositif électronique, d'un questionnaire de recherche par un premier sujet humain dans le cadre d'une étude scientifique qui vise à améliorer les connaissances et à formuler des hypothèses sur un phénomène social ou scientifique donné. En pratique, le dispositif électronique comprend un processeur et un microphone.

Dans l'invention, le procédé comprend,
- une première étape d'obtention d'énoncé vocal configurée pour obtenir, grâce au microphone, au moins un premier énoncé vocal du premier sujet humain qui est représentatif d'une réponse du premier sujet humain à au moins une question de consentement d'un questionnaire de consentement et/ou d'inclusion qui vise à recueillir son consentement dans le cadre de sa participation à l'étude scientifique,
- une première étape de création de signature vocale configurée pour créer, grâce au processeur, une signature vocale de référence à partir du premier énoncé vocal,
- une deuxième étape d'obtention d'énoncé vocal configurée pour obtenir, grâce au microphone, au moins un deuxième énoncé vocal qui est représentatif d'une réponse d'un sujet humain à au moins une question courante du questionnaire de recherche,
- une deuxième étape de création de signature vocale configurée pour créer, grâce au processeur, une signature vocale courante à partir du deuxième énoncé vocal,
- une étape de calcul de similitude configurée pour calculer, grâce au processeur, un degré de similitude entre la signature vocale de référence et la signature vocale courante, et
- une étape de détection de substitution de sujet configurée pour détecter, grâce au processeur, la substitution du premier sujet humain par un deuxième sujet humain lors de la réponse au questionnaire de recherche, en fonction du degré de similitude.

Dans un premier mode de réalisation,
- la deuxième étape de création de signature vocale est en outre configurée pour reconnaitre, grâce au processeur, au moins une émotion dans le deuxième énoncé vocal et associer l'émotion reconnue à la signature vocale de courante, et
- l'étape de détection de substitution de sujet est outre configurée pour détecter, grâce au processeur, la substitution du premier sujet humain par un deuxième sujet humain lors de la réponse au questionnaire de recherche, en fonction du degré de similitude et de l'émotion reconnue.

Dans un deuxième mode de réalisation, le dispositif électronique comprend en outre une unité d'affichage. Dans ce cas, le procédé comprend en outre,
avant la première étape d'obtention d'énoncé vocal, une première étape d'affichage configurée pour afficher, grâce à l'unité d'affichage, au moins une question de consentement du questionnaire de consentement et/ou d'inclusion, et
avant la deuxième étape d'obtention d'énoncé vocal, une deuxième étape d'affichage configurée pour afficher, grâce à l'unité d'affichage, la question courante du questionnaire de recherche.

Dans un exemple du deuxième mode de réalisation, l'unité d'affichage est tactile de manière à détecter des contacts avec un stylet ou un doigt d'un sujet humain, et dans lequel le procédé comprend en outre une étape de confirmation du consentement qui est configurée pour détecter, grâce à l'unité d'affichage, une entrée gestuelle d'un sujet humain qui est représentative de la confirmation du consentement du sujet humain dans le cadre de sa participation à l'étude scientifique.

Dans un troisième mode de réalisation, le dispositif électronique comprend en outre une unité de haut-parleur. Dans ce cas, le procédé comprend en outre, avant la première étape d'obtention d'énoncé vocal, une première étape d'émission sonore configurée pour émettre, grâce à l'unité de haut-parleur, un premier signal sonore qui est représentatif d'au moins une question de consentement du questionnaire de consentement et/ou d'inclusion, et avant la deuxième étape d'obtention d'énoncé vocal, une deuxième étape d'émission sonore configurée pour émettre, grâce à l'unité de haut-parleur, un deuxième signal sonore qui est représentatif de la question courante du questionnaire de recherche.

Par ailleurs, le procédé comprend en outre une étape de génération configurée pour générer, grâce au processeur, le premier signal sonore et le deuxième signal sonore à partir d'un premier texte prédéterminé et d'un deuxième texte prédéterminé qui sont représentatifs des questions respectivement associées aux premier signal sonore et le deuxième signal sonore.

Dans un exemple du troisième mode de réalisation, le procédé comprend en outre,
- une étape de traduction configurée pour traduire le premier texte prédéterminé et le deuxième texte prédéterminé dans une langue prédéterminée du premier sujet humain, et
- l'étape de génération comprend l'utilisation de la traduction du premier texte et du deuxième texte.

Dans un quatrième mode de réalisation, le dispositif électronique comprend en outre une mémoire, la mémoire comprenant au moins une première zone mémoire et une deuxième zone mémoire. Dans ce cas, le procédé comprend en outre une étape de mémorisation configurée pour mémoriser, grâce à la mémoire en fonction du degré de similitude, le premier énoncé vocal et le deuxième énoncé vocal de sorte que le premier énoncé vocal sert de clé mémoire pour accéder au deuxième énoncé vocal.

Dans un exemple du quatrième mode de réalisation, lorsqu'il dépend du premier mode de réalisation, le premier énoncé vocal et le deuxième signal sonore sont mémorisés, grâce à la mémoire, dans la première zone mémoire ou la deuxième zone mémoire en fonction du degré de similitude et de l'émotion reconnue.

L'invention vise également un dispositif électronique pour l'auto-administration d'un questionnaire de recherche par un premier sujet humain dans le cadre d'une étude scientifique qui vise à améliorer les connaissances et à formuler des hypothèses sur un phénomène social ou scientifique donné.

En pratique, le dispositif comprend :
un microphone,
une unité d'affichage,
une mémoire, et
un processeur connecté électriquement au microphone, à l'unité d'affichage et à la mémoire.

Dans l'invention, le processeur est configuré pour :
- afficher, grâce à l'unité d'affichage, au moins une question de consentement d'un questionnaire de consentement et/ou d'inclusion qui vise à recueillir le consentement du premier sujet humain dans le cadre de sa participation à l'étude scientifique,
- obtenir, grâce au microphone, au moins un premier énoncé vocal du premier sujet humain qui est représentatif d'une réponse du premier sujet humain à au moins une question de consentement d'un questionnaire de consentement et/ou d'inclusion qui vise à recueillir son consentement dans le cadre de sa participation à l'étude scientifique,
- exécuter une fonction de création d'une signature vocale de référence à partir du premier énoncé vocal,
- afficher, grâce à l'unité d'affichage, au moins une question courante du questionnaire de recherche,
- obtenir, grâce au microphone, au moins un deuxième énoncé vocal qui est représentatif d'une réponse d'un sujet humain à au moins une question courante du questionnaire de recherche,
- exécuter une fonction de création d'une signature vocale courante à partir du deuxième énoncé vocal,
- exécuter une fonction de calcul d'un degré de similitude entre la signature vocale de référence et la signature vocale courante, et
- exécuter une fonction de détection d'une substitution du premier sujet humain par un deuxième sujet humain, en fonction du degré de similitude.

Dans un premier mode de réalisation, le processeur est en outre configuré pour :
- exécuter une fonction de reconnaissance d'au moins une émotion dans le deuxième énoncé vocal et associer l'émotion reconnue à la signature vocale de courante, et
- exécuter la fonction de détection d'une substitution du premier sujet humain par un deuxième sujet humain, en fonction du degré de similitude et de l'émotion reconnue.

Dans un deuxième mode de réalisation, la mémoire comprend au moins une première zone mémoire et une deuxième zone mémoire, et le processeur est en outre configuré pour mémoriser, grâce à la mémoire et en fonction du degré de similitude, le premier énoncé vocal et le deuxième énoncé vocal de sorte que le premier énoncé vocal sert de clé mémoire pour accéder au deuxième énoncé vocal.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un procédé selon l'invention.
[Fig. 2] La figure 2 représente un dispositif électronique selon l'invention.

Les figures ne respectent pas nécessairement les échelles, notamment en épaisseur, et ce à des fins d'illustration.

### Description des modes de réalisation

Ci-après, nous décrivons le principe général de l'invention ainsi que le vocabulaire associé.

Les inventrices proposent de réaliser des auto-questionnaires dans lesquels le sujet humain pourra saisir vocalement ses réponses.

En particulier, une première partie de l'auto-questionnaire, dit de consentement, requiert la réponse à au moins une question de consentement d'un questionnaire de consentement et/ou d'inclusion de manière à créer une signature vocale de référence. Ensuite, une deuxième partie de l'auto-questionnaire, dit de recherche, requiert la réponse à au moins une question courante d'un questionnaire de recherche de manière à créer une signature vocale courante. Enfin, on détermine s'il s'agit du même sujet humain qui a répondu à la question courante en réalisant une comparaison entre la signature vocale de référence avec la signature vocale courante.

Ainsi, l'invention concerne un procédé pour l'auto-administration, grâce à un dispositif électronique, d'un questionnaire de recherche par un premier sujet humain dans le cadre d'une étude scientifique.

En particulier, dans l'invention, l'étude scientifique vise à améliorer les connaissances et à formuler des hypothèses sur un phénomène social ou scientifique donné.

L'invention peut donc s'appliquer à de nombreux domaines tel que la recherche en santé notamment la recherche médicale.

On entend par « questionnaire de recherche » un outil de mesure qui permet de recueillir des données, si possible, précises et valides sur des variables dont l'analyse doit permettre de répondre à une question de recherche. À ce titre un questionnaire de recherche répond aux mêmes critères de qualité que la mesure d'autres variables, qu'elles soient physiques (p. ex. le volume expiratoire maximal par seconde) ou biologiques (p. ex. le dosage des IgE).

Par exemple, si la question de recherche est « parmi les patients asthmatiques non-fumeurs, la fréquence des crises est-elle associée avec l'exposition à la fumée passive », on pourra mesurer :
a) la présence de l'asthme et le statut de non-fumeur (critères d'éligibilité),
b) la fréquence des crises d'asthme (variable dépendante), et
c) l'exposition à la fumée passive (facteur de risque).

On entend par « auto-administration » du questionnaire de recherche, une méthode d'administration d'un questionnaire qui permet à un sujet humain de répondre par lui-même au questionnaire, et ce, de manière autonome et sans assistance d'un interviewer.

Ci-après, nous décrivons en détail l'invention à l'aide des figures annexées.

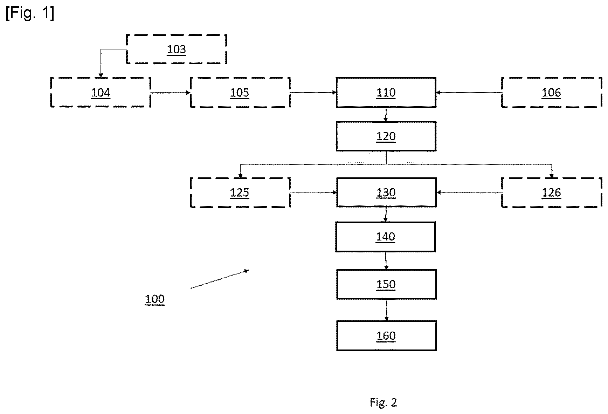

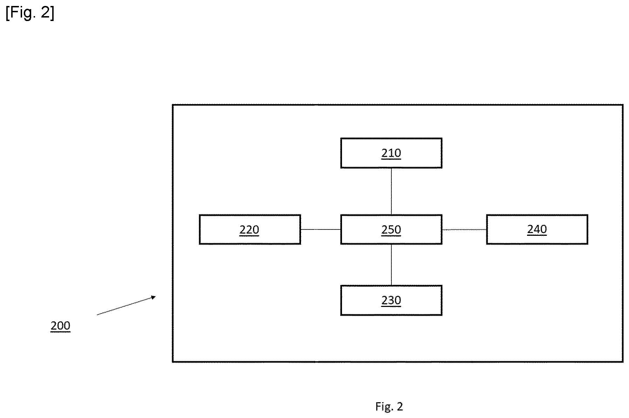

La figure 1 illustre un procédé 100 selon l'invention et la figure 2 illustre un dispositif électronique 200 selon l'invention pour mettre en œuvre le procédé 100.

Dans l'exemple de la figure 2, le dispositif électronique 200 est de type connu en soi et comprend un microphone 210, une unité d'affichage 220, une unité de haut-parleur 230, une mémoire 240 et un processeur 250.

En pratique, le processeur 250 est connecté électriquement au microphone 210, à l'unité d'affichage 220, à l'unité de haut-parleur 230 et à la mémoire 240.

De retour à la figure 1, le procédé 100 comprend tout d'abord une première étape d'obtention d'énoncé vocal 110 qui est configurée pour obtenir, grâce au microphone 210, au moins un premier énoncé vocal d'un premier sujet humain.

En particulier, le premier énoncé vocal est représentatif d'une réponse du premier sujet humain à au moins une question de consentement d'un questionnaire de consentement et/ou d'inclusion qui vise à recueillir son consentement dans le cadre de sa participation à l'étude scientifique.

Ainsi, dans l'invention, il est nécessaire d'obtenir le consentement du premier sujet humain dans sa participation à l'étude scientifique. Dans ce cadre, on entend par consentement, l'acceptation écrite, orale ou la non-opposition à participer à l'étude. C'est le cas notamment selon de nombreuses législations pour lesquelles l'obtention du consentement est obligatoire, préalablement au recueil de données comme des données de santé. Par exemple, en France, la loi Jardé impose ce principe pour les recherches interventionnelles.

De retour à la figure 1, le procédé 100 comprend une première étape de création de signature vocale 120 qui est configurée pour créer, grâce au processeur 250, une signature vocale de référence à partir du premier énoncé vocal.

En effet, il est connu que la voix s'apparente à une signature, à l'image d'une signature manuscrite qui permet de caractériser un locuteur particulier.

Pour créer la signature vocale de référence, on peut utiliser des systèmes connus de reconnaissance automatique du locuteur.

Dans un premier exemple, on pourra utiliser des systèmes basés sur les vecteurs d'information, ou i-vecteurs, qui offrent une représentation en dimension réduite d'un signal sonore. Dans ces systèmes, on extrait des vecteurs d'information d'un signal sonore d'une dizaine de secondes afin de créer une signature. De tels systèmes sont également capables d'éliminer un bruit ambiant, si celui-ci est enregistré au préalable, et de normaliser la variabilité des nuisances observées au moment de l'utilisation du microphone. En pratique de tels systèmes comprennent une base d'apprentissage qui comprend des centaines de modèles de microphone et leurs nuisances particulières.

Dans un deuxième exemple, on pourra utiliser des modèles à base de réseaux de neurones qui sont des évolutions les plus récentes dans le traitement automatique de la parole. L'approche est la même que dans le premier exemple, sauf que les données d'entraînement sont plus nombreuses.

De manière générale, les systèmes basés sur les vecteurs d'information sont plus performants si les extraits sonores durent une trentaine de secondes, avec beaucoup d'exemples de nuisances. Toutefois, dans les situations où les extraits sonores ne durent que quelques secondes dans un environnement très variable, alors les réseaux de neurones prennent l'avantage.

De retour à la figure 1, le procédé 100 comprend une deuxième étape d'obtention d'énoncé vocal 130 qui est configurée pour obtenir, grâce au microphone 210, au moins un deuxième énoncé vocal.

En particulier, le deuxième énoncé vocal est représentatif d'une réponse d'un sujet humain à au moins une question courante du questionnaire de recherche.

Ainsi, dans l'invention, on pourra avoir deux ou plus de questions courantes du questionnaire de recherche.

Par ailleurs, à ce niveau du procédé 100, on peut noter que l'on ignore si le deuxième énoncé vocal a été prononcé par le premier sujet humain ou un deuxième sujet humain.

Par la suite, le procédé 100 comprend une deuxième étape de création de signature vocale 140 qui est configurée pour créer, grâce au processeur 250, une signature vocale courante à partir du deuxième énoncé vocal.

Pour cela, de manière connue, on peut utiliser des systèmes de reconnaissance automatique du locuteur tels que ceux décrits plus haut.

Ainsi, dans l'invention, selon le nombre de questions courantes du questionnaire de recherche, on pourra avoir deux ou plus de signatures vocales courantes.

Puis, le procédé 100 comprend une étape de calcul de similitude configurée 150 pour calculer, grâce au processeur 250, un degré de similitude entre la signature vocale de référence et la signature vocale courante.

Pour cela, on peut utiliser les méthodes disponibles de calcul de similitude.

Dans un premier exemple, on pourra calculer le degré de similitude en dénombrant les différences entre la signature vocale de référence et la signature vocale courante.

Dans un deuxième exemple, on pourra calculer le degré de similitude en calculant un coefficient de détermination entre la signature vocale de référence et la signature vocale courante.

Enfin de retour à la figure 1, le procédé 100 comprend étape de détection de substitution de sujet 160 qui est configurée pour détecter, grâce au processeur 250, la substitution du premier sujet humain par un deuxième sujet humain lors de la réponse au questionnaire de recherche, en fonction du degré de similitude.

Dans un exemple, on pourra comparer le degré de similitude à au moins un seuil prédéterminé pour mesurer la similitude entre la signature vocale de référence et la signature vocale courante. De ce fait, si le degré de similitude se situe au-delà du seuil prédéterminé alors, on pourra en déduire une grande similitude, à savoir que c'est le premier sujet humain qui a répondu à la question courante du questionnaire de santé. Par contre, si le degré de similitude se situe en deçà du seuil prédéterminé alors, on pourra en déduire une faible similitude, à savoir que c'est un deuxième sujet humain qui a répondu à la question courante du questionnaire de santé à la place du premier sujet humain.

On pourra également envisager d'utiliser plusieurs seuils prédéterminés. Par exemple, on pourra utiliser un premier seuil prédéterminé pour identifier une grande similitude et un deuxième seuil prédéterminé pour identifier une faible similitude.

Après avoir décrit l'invention, nous décrivons ci-après différentes façons de réaliser l'invention.

Tout d'abord, nous décrivons ci-après la possibilité d'extraire des émotions du deuxième énoncé vocal de manière à les associer à la question courante du questionnaire de recherche. De cette manière, on peut se servir de cette information pour discriminer les questions courantes du questionnaire de recherche selon les émotions exprimées.

Dans une première façon de réaliser le procédé 100, la deuxième étape de création de signature vocale 140 est en outre configurée pour reconnaitre, grâce au processeur 250, au moins une émotion dans le deuxième énoncé vocal et associer l'émotion reconnue à la signature vocale courante.

Pour cela on pourra utiliser toute méthode connue de reconnaissance des émotions dans un signal sonore (« speech emotion recognition », en anglais), telles que les méthodes d'apprentissage profond.

Dans un exemple de la première façon de réaliser le procédé 100, le processeur 250 est configuré pour reconnaître l'émotion pour chaque seconde ou pour chaque unité de temps du deuxième énoncé vocal. Les types d'émotions qui peuvent être reconnus incluent, par exemple, le doute, le bonheur, la surprise, la colère, le dégoût, la peur, la tristesse, la joie, l'émotion neutre, etc.

Par ailleurs, étant donné que le processeur 250 peut reconnaître plusieurs types d'émotion dans le deuxième énoncé vocal, le processeur 250 est en outre configuré, dans un mode de réalisation particulier de la première façon de réaliser le procédé 100, pour ne conserver que le type d'émotion qui a la fréquence la plus élevée ou la valeur de paramètre la plus élevée.

En outre, dans cette première façon de réaliser le procédé 100, l'étape de détection de substitution de sujet 160 est outre configurée pour détecter, grâce au processeur 250, la substitution du premier sujet humain par un deuxième sujet humain lors de la réponse au questionnaire de recherche, en fonction du degré de similitude et de l'émotion reconnue.

Ci-après, nous décrivons la possibilité de présenter visuellement le questionnaire de consentement et/ou d'inclusion et le questionnaire de recherche au premier sujet humain. De cette manière, on facilite l'administration du questionnaire de recherche, car on affiche les questions pour que le premier sujet humain puisse les lire.

Dans une deuxième façon de réaliser l'invention, avant la première étape d'obtention d'énoncé vocal 110, le procédé 100 comprend une première étape d'affichage 105 qui est configurée pour afficher, grâce à l'unité d'affichage 220, au moins une question de consentement du questionnaire de consentement et/ou d'inclusion.

En particulier, le questionnaire de consentement et/ou d'inclusion vise à recueillir le consentement du premier sujet humain dans le cadre de sa participation à l'étude scientifique.

En outre, dans cette deuxième façon de réaliser l'invention, avant la deuxième étape d'obtention d'énoncé vocal 130, le procédé 100 comprend une deuxième étape d'affichage 125 qui est configurée pour afficher, grâce à l'unité d'affichage 220, au moins une question courante du questionnaire de recherche.

Dans une façon particulière de réaliser la deuxième façon de réaliser l'invention, l'unité d'affichage 220 est tactile.

Dans un premier exemple, l'unité d'affichage 220 est configurée pour détecter des contacts avec au moins un doigt d'un sujet humain.

Dans un deuxième exemple, l'unité d'affichage 220 est configurée pour détecter des contacts avec un stylet d'un sujet humain.

Dans ce cas, le procédé 100 comprend en outre une étape de confirmation du consentement qui est configurée pour détecter, grâce à l'unité d'affichage 220, une entrée gestuelle d'un sujet humain qui est représentative de la confirmation du consentement du sujet humain dans le cadre de sa participation à l'étude scientifique.

Ci-après, nous décrivons la possibilité de présenter oralement le questionnaire de consentement et/ou d'inclusion et le questionnaire de recherche. De cette manière, on facile l'administration du questionnaire de recherche, car on peut inclure dans l'étude scientifique des sujets humains qui ne maîtrisent pas la lecture.

Dans une troisième façon de réaliser l'invention, avant la première étape d'obtention d'énoncé vocal 110, le procédé 100 comprend une première étape d'émission sonore 106 qui est configurée pour émettre, grâce à l'unité de haut-parleur 230, un premier signal sonore.

En particulier le premier signal sonore est représentatif d'au moins une question de consentement du questionnaire de consentement et/ou d'inclusion.

En outre, dans cette troisième façon de réaliser l'invention, avant la deuxième étape d'obtention d'énoncé vocal 130, le procédé 100 comprend une deuxième étape d'émission sonore 126 qui est configurée pour émettre, grâce à l'unité de haut-parleur 230, un deuxième signal sonore.

En particulier, le deuxième signal sonore est représentatif d'au moins une question courante du questionnaire de recherche.

Par ailleurs, dans cette troisième façon de réaliser l'invention, le procédé 100 comprend en outre une étape de génération 104 qui est configurée pour générer, grâce au processeur 250, le premier signal sonore et le deuxième signal sonore à partir d'un premier texte prédéterminé et d'un deuxième texte prédéterminé.

En particulier, le premier texte prédéterminé et le deuxième texte prédéterminé sont représentatifs des questions respectivement associées au premier signal sonore et le deuxième signal sonore.

Dans une mode de réalisation de cette troisième façon de réaliser l'invention, le procédé 100 comprend en outre une étape de traduction 103 qui est configurée pour traduire le premier texte prédéterminé et le deuxième texte prédéterminé dans une langue prédéterminée du premier sujet humain.

Par ailleurs, dans ce mode de réalisation de cette troisième façon de réaliser l'invention, l'étape de génération 104 comprend l'utilisation de la traduction du premier texte et du deuxième texte.

Ci-après, nous décrivons la possibilité de stocker le premier énoncé vocal et le deuxième énoncé vocal, de sorte qu'il soit aisé de les récupérer depuis la mémoire 240.

Dans une quatrième façon de réaliser l'invention, la mémoire 240 comprend au moins une première zone mémoire 241 et une deuxième zone mémoire 242.

Par ailleurs, dans cette quatrième façon de réaliser l'invention, le procédé 100 comprend en outre une étape de mémorisation 155 qui est configurée pour mémoriser, grâce à la mémoire 240 en fonction du degré de similitude, le premier énoncé vocal et le deuxième énoncé vocal de sorte que le premier énoncé vocal sert de clé mémoire 240 pour accéder au deuxième énoncé vocal.

Dans une mode de réalisation de cette quatrième façon de réaliser l'invention, le processeur 250 mémorise le premier énoncé vocal et le deuxième signal sonore, grâce à la mémoire 240, dans la première zone mémoire 241 ou la deuxième zone mémoire 242 en fonction du degré de similitude et de l'émotion reconnue. Dans ce cas, le processeur 250 pourra mémoriser le premier énoncé vocal et le deuxième signal sonore, dans la première zone mémoire 241 ou la deuxième zone mémoire 242, selon l'émotion reconnue.

Ci-après, nous décrivons la mise en œuvre du procédé 100 par le dispositif électronique 200.

En opération, le processeur 250 du dispositif électronique 200 est configuré pour:
- afficher, grâce à l'unité d'affichage 220, au moins une question de consentement du questionnaire de consentement et/ou d'inclusion,
- obtenir, grâce au microphone 210, au moins le premier énoncé vocal du premier sujet humain,
- exécuter une fonction de création de la signature vocale de référence à partir du premier énoncé vocal,
- afficher, grâce à l'unité d'affichage 220, au moins une question courante du questionnaire de recherche,
- obtenir, grâce au microphone 210, au moins le deuxième énoncé vocal,
- exécuter une fonction de création d'une signature vocale courante à partir du deuxième énoncé vocal,
- exécuter une fonction de calcul d'un degré de similitude entre la signature vocale de référence et la signature vocale courante, et
- exécuter une fonction de détection d'une substitution du premier sujet humain par un deuxième sujet humain, en fonction du degré de similitude.

Dans une première façon de réaliser l'invention, le processeur 250 du dispositif électronique 200 est en outre configuré pour :
- exécuter une fonction de reconnaissance d'au moins une émotion dans le deuxième énoncé vocal et associer l'émotion reconnue à la signature vocale de courante, et
- exécuter la fonction de détection d'une substitution du premier sujet humain par un deuxième sujet humain, en fonction du degré de similitude et de l'émotion reconnue.

Dans une deuxième façon de réaliser l'invention, le processeur 250 du dispositif électronique 200 est en outre configuré pour mémoriser, grâce à la mémoire 240 et en fonction du degré de similitude, le premier énoncé vocal et le deuxième énoncé vocal de sorte que le premier énoncé vocal sert de clé mémoire 240 pour accéder au deuxième énoncé vocal.

Dans une mode de réalisation de cette deuxième façon de réaliser l'invention, le processeur 250 du dispositif électronique 200 est en outre configuré
pour mémoriser le premier énoncé vocal et le deuxième, grâce à la mémoire 240, dans la première zone mémoire 241 ou la deuxième zone mémoire 242 en fonction du degré de similitude et de l'émotion reconnue.

Dans une troisième façon de réaliser l'invention, le processeur 250 du dispositif électronique 200 est en outre configuré pour :
- avant l'obtention du premier énoncé vocal, émettre, grâce à l'unité de haut-parleur 230, le premier signal sonore,
- avant l'obtention du deuxième énoncé vocal, émettre, grâce à l'unité de haut-parleur 230, le deuxième signal sonore, et
- exécuter une fonction de génération du premier signal sonore et du deuxième signal sonore à partir du premier texte prédéterminé et du deuxième texte prédéterminé.

Dans une mode de réalisation de cette troisième façon de réaliser l'invention, le processeur 250 du dispositif électronique 200 est en outre configuré pour :
- traduire le premier texte prédéterminé et le deuxième texte prédéterminé dans une langue prédéterminée du premier sujet humain, et
- exécuter la fonction de génération du premier signal sonore et du deuxième signal sonore à partir de la traduction du premier texte et du deuxième texte.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

L'invention est définie par les revendications annexées .

## Revendications

1. Procédé (100) pour l'auto-administration, grâce à un dispositif électronique (200), d'un questionnaire de recherche par un premier sujet humain dans le cadre d'une étude scientifique qui vise à améliorer les connaissances et à formuler des hypothèses sur un phénomène social ou scientifique donné, le dispositif électronique (200) comprenant un processeur (250) et un microphone (210), le procédé comprenant,
- une première étape d'obtention d'énoncé vocal (110) configurée pour obtenir, grâce au microphone (210), au moins un premier énoncé vocal du premier sujet humain qui est représentatif d'une réponse du premier sujet humain à au moins une question de consentement d'un questionnaire de consentement et/ou d'inclusion qui vise à recueillir son consentement dans le cadre de sa participation à l'étude scientifique,
- une première étape de création de signature vocale (120) configurée pour créer, grâce au processeur (250), une signature vocale de référence à partir du premier énoncé vocal,
- une deuxième étape d'obtention d'énoncé vocal (130) configurée pour obtenir, grâce au microphone (210), au moins un deuxième énoncé vocal qui est représentatif d'une réponse d'un sujet humain à au moins une question courante du questionnaire de recherche,
- une deuxième étape de création de signature vocale (140) configurée pour créer, grâce au processeur (250), une signature vocale courante à partir du deuxième énoncé vocal,
- une étape de calcul de similitude configurée (150) pour calculer, grâce au processeur (250), un degré de similitude entre la signature vocale de référence et la signature vocale courante, et
- une étape de détection de substitution de sujet (160) configurée pour détecter, grâce au processeur (250), la substitution du premier sujet humain par un deuxième sujet humain lors de la réponse au questionnaire de recherche, en fonction du degré de similitude.

2. Procédé selon la revendication 1 dans lequel le processeur (250) met en œuvre une méthode de reconnaissance des émotions dans un signal sonore, et dans lequel,
- la deuxième étape de création de signature vocale (140) est en outre configurée pour reconnaitre, grâce au processeur (250), au moins une émotion dans le deuxième énoncé vocal et associer l'émotion reconnue à la signature vocale de courante, et
- l'étape de détection de substitution de sujet (160) est outre configurée pour détecter, grâce au processeur (250), la substitution du premier sujet humain par un deuxième sujet humain lors de la réponse au questionnaire de recherche, en fonction du degré de similitude et de l'émotion reconnue.

3. Procédé selon l'une quelconque des revendications 1 à 2 dans
lequel le dispositif électronique (200) comprend en outre une unité d'affichage (220), le procédé comprenant en outre,
avant la première étape d'obtention d'énoncé vocal (110), une première étape d'affichage (105) configurée pour afficher, grâce à l'unité d'affichage (220), au moins une question de consentement du questionnaire de consentement et/ou d'inclusion, et avant la deuxième étape d'obtention d'énoncé vocal (130), une deuxième étape d'affichage (125) configurée pour afficher, grâce à l'unité d'affichage (220), la question courante du questionnaire de recherche.

4. Procédé selon la revendication 3 dans lequel l'unité d'affichage (220) est tactile de manière à détecter des contacts avec un stylet ou un doigt d'un sujet humain,
et dans lequel le procédé comprend en outre une étape de confirmation du consentement qui est configurée pour détecter, grâce à l'unité d'affichage (220), une entrée gestuelle d'un sujet humain qui est représentative de la confirmation du consentement du sujet humain dans le cadre de sa participation à l'étude scientifique.

5. Procédé selon l'une quelconque des revendications 1 à 4 dans
lequel le dispositif électronique (200) comprend en outre une unité de haut-parleur (230), le procédé comprenant en outre,
avant la première étape d'obtention d'énoncé vocal (110), une première étape d'émission sonore (106) configurée pour émettre, grâce à l'unité de haut-parleur (230), un premier signal sonore qui est représentatif d'au moins une question de consentement du questionnaire de consentement et/ou d'inclusion, et
avant la deuxième étape d'obtention d'énoncé vocal (130), une deuxième étape d'émission sonore (126) configurée pour émettre, grâce à l'unité de haut-parleur (230), un deuxième signal sonore qui est représentatif de la question courante du questionnaire de recherche,
dans lequel,
le procédé (100) comprend en outre une étape de génération (104) configurée pour générer, grâce au processeur (250), le premier signal sonore et le deuxième signal sonore à partir d'un premier texte prédéterminé et d'un deuxième texte prédéterminé qui sont représentatifs des questions respectivement associées aux premier signal sonore et le deuxième signal sonore.

6. Procédé selon la revendication 5, comprenant en outre,
- une étape de traduction (103) configurée pour traduire le premier texte prédéterminé et le deuxième texte prédéterminé dans une langue prédéterminée du premier sujet humain, et
- l'étape de génération (104) comprend l'utilisation de la traduction du premier texte et du deuxième texte.

7. Procédé selon l'une quelconque des revendications 1 à 6 dans lequel le dispositif électronique (200) comprend en outre une mémoire (240), la mémoire (240) comprenant au moins une première zone mémoire (241) et une deuxième zone mémoire (242), le procédé (100) comprenant en outre une étape de mémorisation (155) configurée pour mémoriser, grâce à la mémoire (240) en fonction du degré de similitude, le premier énoncé vocal et le deuxième énoncé vocal de sorte que le premier énoncé vocal sert de clé mémoire (240) pour accéder au deuxième énoncé vocal.

8. Procédé selon la revendication 7 lorsqu'elle dépend de la revendication 2, dans lequel le premier énoncé vocal et le deuxième signal sonore sont mémorisés, grâce à la mémoire (240), dans la première zone mémoire (241) ou la deuxième zone mémoire (242) en fonction du degré de similitude et de l'émotion reconnue.

9. Dispositif électronique (200) pour l'auto-administration d'un questionnaire de recherche par un premier sujet humain dans le cadre d'une étude scientifique qui vise à améliorer les connaissances et à formuler des hypothèses sur un phénomène social ou scientifique donné, le dispositif (200) comprenant :
un microphone (210),
une unité d'affichage (220),
une mémoire (240), et
un processeur (250) connecté électriquement au microphone (210), à l'unité d'affichage (220) et à la mémoire (240),
dans lequel le processeur (250) est configuré pour :
- afficher, grâce à l'unité d'affichage (220), au moins une question de consentement d'un questionnaire de consentement et/ou d'inclusion qui vise à recueillir le consentement du premier sujet humain dans le cadre de sa participation à l'étude scientifique,
- obtenir, grâce au microphone (210), au moins un premier énoncé vocal du premier sujet humain qui est représentatif d'une réponse du premier sujet humain à au moins une question de consentement d'un questionnaire de consentement et/ou d'inclusion qui vise à recueillir son consentement dans le cadre de sa participation à l'étude scientifique,
- exécuter une fonction de création d'une signature vocale de référence à partir du premier énoncé vocal,
- afficher, grâce à l'unité d'affichage (220), au moins une question courante du questionnaire de recherche,
- obtenir, grâce au microphone (210), au moins un deuxième énoncé vocal qui est représentatif d'une réponse d'un sujet humain à au moins une question courante du questionnaire de recherche,
- exécuter une fonction de création d'une signature vocale courante à partir du deuxième énoncé vocal,
- exécuter une fonction de calcul d'un degré de similitude entre la signature vocale de référence et la signature vocale courante, et
- exécuter une fonction de détection d'une substitution du premier sujet humain par un deuxième sujet humain, en fonction du degré de similitude.

10. Dispositif selon la revendication 9, dans lequel le processeur (250) met en œuvre une méthode de reconnaissance des émotions dans un signal sonore, le processeur (250) étant en outre configuré pour :
- exécuter une fonction de reconnaissance d'au moins une émotion dans le deuxième énoncé vocal et associer l'émotion reconnue à la signature vocale de courante, et
- exécuter la fonction de détection d'une substitution du premier sujet humain par un deuxième sujet humain, en fonction du degré de similitude et de l'émotion reconnue.

11. Dispositif selon l'une quelconque des revendications 8 à 9, dans lequel la mémoire (240) comprend au moins une première zone mémoire (241) et une deuxième zone mémoire (242), le processeur (250) étant en outre configuré pour mémoriser, grâce à la mémoire (240) et en fonction du degré de similitude, le premier énoncé vocal et le deuxième énoncé vocal de sorte que le premier énoncé vocal sert de clé mémoire (240) pour accéder au deuxième énoncé vocal.

## Patentansprüche

1. Verfahren (100) zur Selbstverwaltung eines Forschungsfragebogens durch einen ersten menschlichen Probanden im Rahmen einer wissenschaftlichen Studie, die darauf abzielt, den Kenntnisstand zu verbessern und Hypothesen über ein bestimmtes soziales oder wissenschaftliches Phänomen zu formulieren, mithilfe einer elektronischen Vorrichtung (200), wobei die elektronische Vorrichtung (200) einen Prozessor (250) und ein Mikrofon (210) umfasst, wobei das Verfahren umfasst:
- einen ersten Schritt des Erhaltens einer Sprachäußerung (110), der ausgelegt ist, um mithilfe des Mikrofons (210) mindestens eine erste Sprachäußerung des ersten menschlichen Probanden zu erhalten, die für eine Antwort des ersten menschlichen Probanden auf mindestens eine Zustimmungsfrage eines Zustimmungs- und/oder Einschlussfragebogens repräsentativ ist, der darauf abzielt, seine Zustimmung im Rahmen seiner Teilnahme an der wissenschaftlichen Studie einzuholen,
- einen ersten Schritt des Erstellens einer Sprachsignatur (120), der ausgelegt ist, um mithilfe des Prozessors (250) aus der ersten Sprachäußerung eine Referenz-Sprachsignatur zu erstellen,
- einen zweiten Schritt des Erhaltens einer Sprachäußerung (130), der ausgelegt ist, um mithilfe des Mikrofons (210) mindestens eine zweite Sprachäußerung zu erhalten, die für eine Antwort eines menschlichen Probanden auf mindestens eine aktuelle Frage des Forschungsfragebogens repräsentativ ist,
- einen zweiten Schritt des Erstellens einer Sprachsignatur (140), der ausgelegt ist, um mithilfe des Prozessors (250) aus der zweiten Sprachäußerung eine aktuelle Sprachsignatur zu erstellen,
- einen Schritt des Berechnens einer Ähnlichkeit (150), um mithilfe des Prozessors (250) einen Ähnlichkeitsgrad zwischen der Referenz-Sprachsignatur und der aktuellen Sprachsignatur zu berechnen, und
- einen Schritt des Erkennens eines Probandwechsels (160), der ausgelegt ist, um mithilfe des Prozessors (250) den Wechsel vom ersten menschlichen Probanden zu einem zweiten menschlichen Probanden bei der Beantwortung des Forschungsfragebogens in Abhängigkeit vom Ähnlichkeitsgrad zu erkennen.

2. Verfahren nach Anspruch 1, wobei der Prozessor (250) eine Methode des Erkennens von Emotionen in einem Tonsignal anwendet, und wobei
- der zweite Schritt des Erstellens einer Sprachsignatur (140) ferner ausgelegt ist, um mithilfe des Prozessors (250) mindestens eine Emotion in der zweiten Sprachäußerung zu erkennen und die erkannte Emotion der aktuellen Sprachsignatur zuzuordnen, und
- der Schritt des Erkennens des Probandwechsels (160) ferner ausgelegt ist, um mithilfe des Prozessors (250) den Wechsel vom ersten menschlichen Probanden zum zweiten menschlichen Probanden bei der Beantwortung des Forschungsfragebogens in Abhängigkeit vom Ähnlichkeitsgrad und der erkannten Emotion zu erkennen.

3. Verfahren nach einem der Ansprüche 1 bis 2, wobei die elektronische Vorrichtung (200) ferner eine Anzeigeeinheit (220) umfasst, wobei das Verfahren ferner umfasst,
vor dem ersten Schritt des Erhaltens einer Sprachäußerung (110) einen ersten Anzeigeschritt (105), der ausgelegt ist, um mithilfe der Anzeigeeinheit (220) mindestens eine Zustimmungsfrage des Zustimmungs- und/oder Einschlussfragebogens anzuzeigen, und vor dem zweiten Schritt des Erhaltens einer Sprachäußerung (130) einen zweiten Anzeigeschritt (125), der ausgelegt ist, um mithilfe der Anzeigeeinheit (220) die aktuelle Frage des Forschungsfragebogens anzuzeigen.

4. Verfahren nach Anspruch 3, wobei die Anzeigeeinheit (220) derart berührungsempfindlich ist, dass Kontakte mit einem Stift oder einem Finger eines menschlichen Probanden erkannt werden,
und wobei das Verfahren ferner einen Schritt des Bestätigens der Zustimmung umfasst, der ausgelegt ist, um mithilfe der Anzeigeeinheit (220) eine gestenbasierte Eingabe eines menschlichen Probanden zu erfassen, die für die Bestätigung der Zustimmung des menschlichen Probanden im Rahmen seiner Teilnahme an der wissenschaftlichen Studie repräsentativ ist.

5. Verfahren nach einem der Ansprüche 1 bis 4, wobei die elektronische Vorrichtung (200) ferner eine Lautsprechereinheit (230) umfasst, wobei das Verfahren ferner umfasst,
vor dem ersten Schritt des Erhaltens einer Sprachäußerung (110) einen ersten Tonausgabeschritt (106), der ausgelegt ist, um mithilfe der Lautsprechereinheit (230) ein erstes Tonsignal auszugeben, das für mindestens eine Zustimmungsfrage des Zustimmungs- und/oder Einschlussfragebogens repräsentativ ist, und
vor dem zweiten Schritt des Erhaltens einer Sprachäußerung (130) einen zweiten Tonausgabeschritt (126), der ausgelegt ist, um mithilfe der Lautsprechereinheit (230) ein zweites Tonsignal auszugeben, das für die aktuelle Frage des Forschungsfragebogens repräsentativ ist,
wobei
das Verfahren (100) ferner einen Schritt des Generierens (104) umfasst, der ausgelegt ist, um mithilfe des Prozessors (250) das erste Tonsignal und das zweite Tonsignal aus einem ersten vorgegebenen Text und einem zweiten vorgegebenen Text zu generieren, die für die Fragen repräsentativ sind, die jeweils dem ersten Tonsignal und dem zweiten Tonsignal zugeordnet sind.

6. Verfahren nach Anspruch 5, das ferner umfasst:
- einen Schritt des Übersetzens (103), der ausgelegt ist, um den ersten vorgegebenen Text und den zweiten vorgegebenen Text in eine vorgegebene Sprache des ersten menschlichen Probanden zu übersetzen, und
- wobei der Schritt des Generierens (104) die Verwendung der Übersetzung des ersten Textes und des zweiten Textes umfasst.

7. Verfahren nach einem der Ansprüche 1 bis 6, wobei die elektronische Vorrichtung (200) ferner einen Speicher (240) umfasst, wobei der Speicher (240) mindestens einen ersten Speicherbereich (241) und einen zweiten Speicherbereich (242) umfasst, wobei das Verfahren (100) ferner einen Speicherschritt (155) umfasst, der ausgelegt ist, um mithilfe des Speichers (240) in Abhängigkeit vom Ähnlichkeitsgrad die erste Sprachäußerung und die zweite Sprachäußerung so zu speichern, dass die erste Sprachäußerung als Speicher-Schlüssel (240) für den Zugriff auf die zweite Sprachäußerung dient.

8. Verfahren nach Anspruch 7, wenn er von Anspruch 2 abhängt, wobei die erste Sprachäußerung und das zweite Tonsignal mithilfe des Speichers (240) im ersten Speicherbereich (241) oder im zweiten Speicherbereich (242) in Abhängigkeit vom Ähnlichkeitsgrad und der erkannten Emotion gespeichert werden.

9. Elektronische Vorrichtung (200) zur Selbstverwaltung eines Forschungsfragebogens durch einen ersten menschlichen Probanden im Rahmen einer wissenschaftlichen Studie, die darauf abzielt, den Kenntnisstand zu verbessern und Hypothesen über ein bestimmtes soziales oder wissenschaftliches Phänomen zu formulieren, wobei die Vorrichtung (200) umfasst:
ein Mikrofon (210),
eine Anzeigeeinheit (220),
einen Speicher (240), und
einen Prozessor (250), der elektrisch mit dem Mikrofon (210), der Anzeigeeinheit (220) und dem Speicher (240) verbunden ist,
wobei der Prozessor (250) ausgelegt ist, um:
- mithilfe der Anzeigeeinheit (220) mindestens eine Zustimmungsfrage eines Zustimmungs- und/oder Einschlussfragebogens anzuzeigen, der darauf abzielt, die Zustimmung des ersten menschlichen Probanden im Rahmen seiner Teilnahme an der wissenschaftlichen Studie einzuholen,
- mithilfe des Mikrofons (210) mindestens eine erste Sprachäußerung des ersten menschlichen Probanden zu erhalten, die für eine Antwort des ersten menschlichen Probanden auf mindestens eine Zustimmungsfrage eines Zustimmungs- und/oder Einschlussfragebogens repräsentativ ist, der darauf abzielt, seine Zustimmung im Rahmen seiner Teilnahme an der wissenschaftlichen Studie einzuholen,
- eine Funktion des Erstellens einer Referenz-Sprachsignatur aus der ersten Sprachäußerung auszuführen,
- mithilfe der Anzeigeeinheit (220) mindestens eine aktuelle Frage des Forschungsfragebogens anzuzeigen,
- mithilfe des Mikrofons (210) mindestens eine zweite Sprachäußerung zu erhalten, die für eine Antwort eines menschlichen Probanden auf mindestens eine aktuelle Frage des Forschungsfragebogens repräsentativ ist,
- eine Funktion des Erstellens einer aktuellen Sprachsignatur aus der zweiten Sprachäußerung auszuführen,
- eine Funktion des Berechnens eines Ähnlichkeitsgrades zwischen der Referenz-Sprachsignatur und der aktuellen Sprachsignatur auszuführen, und
- eine Funktion des Erkennens eines Wechsels vom ersten menschlichen Probanden zu einem zweiten menschlichen Probanden in Abhängigkeit vom Ähnlichkeitsgrad auszuführen.

10. Vorrichtung nach Anspruch 9, wobei der Prozessor (250) eine Methode des Erkennens von Emotionen in einem Tonsignal anwendet, wobei der Prozessor (250) ferner ausgelegt ist, um:
- eine Funktion des Erkennens mindestens einer Emotion in der zweiten Sprachäußerung auszuführen und die erkannte Emotion der aktuellen Sprachsignatur zuzuordnen, und
- die Funktion des Erkennens eines Wechsels vom ersten menschlichen Probanden zu einem zweiten menschlichen Probanden in Abhängigkeit vom Ähnlichkeitsgrad und der erkannten Emotion auszuführen.

11. Vorrichtung nach einem der Ansprüche 8 bis 9, wobei der Speicher (240) mindestens einen ersten Speicherbereich (241) und einen zweiten Speicherbereich (242) umfasst, wobei der Prozessor (250) ferner ausgelegt ist, um mithilfe des Speichers (240) und in Abhängigkeit vom Ähnlichkeitsgrad die erste Sprachäußerung und die zweite Sprachäußerung so zu speichern, dass die erste Sprachäußerung als Speicherschlüssel (240) für den Zugriff auf die zweite Sprachäußerung dient.

## Claims

1. A method (100) for the self-administration, by means of an electronic device (200), of a research questionnaire by a first human subject as part of a scientific study which aims to improve knowledge and to formulate hypotheses about a given social or scientific phenomenon, the electronic device (200) comprising a processor (250) and a microphone (210), the method comprising:
- a first voice utterance obtaining step (110), configured so as to obtain, by means of the microphone (210), at least one first voice utterance from the first human subject, which is representative of a response from the first human subject to at least one consent question of a consent and/or inclusion questionnaire which is intended to collect his/her consent to participate in the scientific study,
- a first voice signature creation step (120), configured to create, by means of the processor (250), a reference voice signature from the first voice utterance,
- a second voice utterance obtaining step (130) configured to obtain, by means of the microphone (210), at least one second voice utterance which is representative of a response from a human subject to at least one current question from the research questionnaire,
- a second voice signature creation step (140), configured to create, by means of the processor (250), a current voice signature from the second voice utterance,
- a similarity calculation step (150) configured to calculate, by means of the processor (250), a degree of similarity between the reference voice signature and the current voice signature, and
- a subject substitution detection step (160), configured to detect, by means of the processor (250), the substitution of the first human subject by a second human subject when responding to the research questionnaire, as a function of the degree of similarity.

2. The method according to claim 1, wherein the processor (250) implements a method of recognising emotions in a sound signal, and wherein,
- the second voice signature creation step (140) is further configured to recognise, by means of the processor (250), at least one emotion in the second voice utterance and to associate the recognised emotion with the current voice signature, and
- the subject substitution detection step (160) is further configured to detect, by means of the processor (250), the substitution of the first human subject by a second human subject when responding to the research questionnaire, as a function of the degree of similarity and the recognised emotion.

3. The method according to either of claims 1 or 2, wherein the electronic device (200) further comprises a display unit (220), the method further comprising:
before the first voice utterance obtaining step (110), a first display step (105) configured to display, by means of the display unit (220), at least one consent question from the consent and/or inclusion questionnaire and, before the second voice utterance obtaining step (130), a second display step (125) configured to display, by means of the display unit (220), the current question from the research questionnaire.

4. The method according to claim 3, wherein the display unit (220) is touch-sensitive so as to detect contact with a stylus or a finger of a human subject,
and wherein the method further comprises a consent confirmation step that is configured to detect, by means of the display unit (220), a gesture input from a human subject that is representative of the human subject confirming consent to participate in the scientific study.

5. The method according to any one of claims 1 to 4, wherein the electronic device (200) further comprises a speaker unit (230), the method further comprising:
prior to the first voice utterance obtaining step (110), a first sound emitting step (106) configured to emit, by means of the loudspeaker unit (230), a first sound signal which is representative of at least one consent question from the consent and/or inclusion questionnaire, and
prior to the second voice utterance obtaining step (130), a second sound emission step (126) configured to emit, by means of the loudspeaker unit (230), a second sound signal which is representative of the current question from the research questionnaire,
wherein,
the method (100) further comprises a generation step (104) configured to generate, by means of the processor (250), the first sound signal and the second sound signal from a first predetermined text and a second predetermined text which are representative of the questions respectively associated with the first sound signal and the second sound signal.

6. The method according to claim 5, further comprising:
- a translation step (103) configured to translate the first predetermined text and the second predetermined text into a predetermined language of the first human subject, and
- the generation step (104) comprises using the translation of the first text and the second text.

7. The method according to any one of claims 1 to 6, wherein the electronic device (200) further comprises a memory (240), the memory (240) comprising at least a first memory area (241) and a second memory area (242), the method (100) further comprising a storage step (155) configured to store, by means of the memory (240) and as a function of the degree of similarity, the first voice utterance and the second voice utterance, so that the first voice utterance serves as a memory key (240) for accessing the second voice utterance.

8. The method according to claim 7 when dependent on claim 2, wherein the first voice utterance and the second sound signal are stored, by means of the memory (240), in the first memory area (241) or the second memory area (242) depending on the degree of similarity and the recognised emotion.

9. An electronic device (200) for self-administration of a research questionnaire by a first human subject as part of a scientific study which aims to improve knowledge and to formulate hypotheses about a given social or scientific phenomenon, the device (200) comprising:
a microphone (210),
a display unit (220),
a memory (240), and
a processor (250), electrically connected to the microphone (210), the display unit (220) and the memory (240),
wherein the processor (250) is configured to:
- display, by means of the display unit (220), at least one consent question from a consent and/or inclusion questionnaire which is intended to collect the consent of the first human subject to participate in the scientific study,
- obtain, by means of the microphone (210), at least one first voice utterance from the first human subject, which is representative of a response from the first human subject to at least one consent question from a consent and/or inclusion questionnaire which is intended to collect his/her consent to participate in the scientific study;
- execute a function to create a reference voice signature from the first voice utterance,
- display, by means of the display unit (220), at least one current question from the research questionnaire,
- obtain, by means of the microphone (210), at least one second voice utterance which is representative of a response from a human subject to at least one current question from the research questionnaire;
- execute a function to create a current voice signature from the second voice utterance,
- execute a function to calculate a degree of similarity between the reference voice signature and the current voice signature, and
- execute a function to detect substitution of the first human subject by a second human subject, as a function of the degree of similarity.

10. The device according to claim 9, wherein the processor (250) implements a method for recognising emotions in a sound signal, the processor (250) being further configured to:
- execute a function to recognise at least one emotion in the second voice utterance and associate the recognised emotion with the current voice signature, and
- execute the function of detecting a substitution of the first human subject by a second human subject, depending on the degree of similarity and the recognised emotion.

11. The device according to either of claims 8 or 9, wherein the memory (240) comprises at least one first memory area (241) and one second memory area (242), the processor (250) being further configured to store, by means of the memory (240) and as a function of the degree of similarity, the first voice utterance and the second voice utterance so that the first voice utterance serves as a memory key (240) for accessing the second voice utterance.
